# FASCICULE DE BREVET EUROPEEN

(11) **EP 2 310 725 B1**
(45) Date de publication et mention de la délivrance du brevet: **29.04.2015**
(21) Numéro de dépôt: 09772452.0
(22) Date de dépôt: 30.06.2009
(51) Int. Cl.: F16K 1/226

(54) **ENSEMBLE D'UN CORPS DE VANNE**
VENTILANORDNUNG
VALVE BODY ASSEMBLY

(30) Priorité: 01.07.2008 FR 0803725
(43) Date de publication de la demande: 20.04.2011
(73) Titulaire: Valeo Systèmes de Contrôle Moteur, 95800 Cergy (FR)
(72) Inventeur: FESTOR, Aude, 69003 Lyon (FR); ADENOT, Sébastien, 95300 Pontoise (FR); RECHKE, Bastien, 78110 Le Vesinet (FR)
(74) Mandataire: Gevers France
(86) Numéro de dépôt international: PCT/EP2009/058214
(87) Numéro de publication internationale: WO 2010/000752

(56) Documents cités:
- CH-A5- 677 012
- DE-A1- 2 427 995
- DE-A1- 19 936 457
- GB-A- 1 248 860
- US-A- 3 572 731

## Description

L'invention concerne un ensemble d'un corps de vanne et d'un joint d'étanchéité.

Un moteur thermique de véhicule automobile comporte une chambre de combustion, généralement formée par une pluralité de cylindres, dans laquelle un mélange de comburant et de carburant est brûlé pour générer le travail du moteur. Le comburant comporte de l'air, qui peut être comprimé ou non, selon que le moteur comporte un turbocompresseur ou non. L'air peut par ailleurs être mélangé à des gaz d'échappement; on parle de gaz d'échappement recirculés. Les gaz admis dans la chambre de combustion sont dénommés gaz d'admission.

Dans le cas d'un moteur avec un turbocompresseur, l'air est admis dans le moteur, comprimé par le compresseur, admis dans les cylindres où il est brûlé avec le carburant puis évacué par les canalisations d'échappement. Les gaz d'échappement entraînent une turbine, solidaire du compresseur et formant avec lui le turbocompresseur. La recirculation des gaz d'échappement peut être dite "basse pression", lorsqu'elle est faite sur des gaz d'échappement prélevés après la turbine et réintroduits avant le compresseur, ou "haute pression", lorsqu'elle est faite avec des gaz prélevés avant la turbine et réintroduits après le compresseur. A titre d'exemple, la recirculation basse pression permet, pour un moteur à essence, de diminuer la consommation de carburant et d'obtenir un meilleur rendement moteur, tandis qu'elle permet, pour un moteur diesel, de diminuer la pollution pour être en accord avec les normes environnementales.

Les gaz sont donc amenés à être guidés dans diverses canalisations. Le contrôle des mouvements des gaz est fait grâce à des vannes, qui autorisent, inhibent ou régulent les mouvements des gaz dans une canalisation particulière.

Dans le cas d'une boucle de recirculation des gaz d'échappement, une vanne dite "trois voies" est généralement prévue; une telle vanne comporte un conduit d'entrée des gaz dans la vanne, un premier conduit de sortie des gaz hors de la vanne, dénommé conduit d'échappement, qui est un conduit de sortie directe des gaz d'échappement, et un deuxième conduit de sortie des gaz, dénommé conduit de recirculation, qui est un conduit d'entrée des gaz dans un refroidisseur, débouchant lui-même dans la voie recirculée. Les gaz d'échappement admis dans le conduit d'entrée de la vanne peuvent soit être directement évacués par le conduit d'échappement, débouchant dans une canalisation d'échappement du moteur, soit être admis, par le conduit de recirculation, dans le refroidisseur, en sortie duquel ils sont mélangés aux gaz d'admission.

Un volet est monté dans la vanne trois voies pour ouvrir, obturer ou réguler la voie recirculée; le conduit de recirculation est mis en communication fluidique avec une canalisation guidant les gaz dans le volume du refroidisseur ou peut directement déboucher dans le volume du refroidisseur.

Généralement, la structure d'une vanne trois voies est la suivante. Une canalisation monobloc (dénommée par la suite canalisation d'échappement) forme le conduit d'entrée des gaz dans la vanne et le conduit d'échappement direct des gaz hors de vanne. Cette canalisation d'échappement est percée d'un orifice au niveau de laquelle elle est fixée sur un élément dénommé corps de vanne, qui est un élément dans lequel est ménagé le conduit de recirculation, avec lequel la canalisation d'échappement est mise en communication fluidique au niveau de son orifice. Le corps de vanne supporte notamment le volet et son moteur d'entraînement en rotation.

L'étanchéité aux gaz doit être assurée entre la canalisation d'échappement et le corps de vanne. La température des gaz d'échappement introduits dans le refroidisseur pour être recirculés est très importante; par conséquent, un joint du type élastomère est mal adapté et c'est un joint métallique qui est de préférence fixé entre la canalisation et le corps de vanne. Du fait des dilatations thermiques différentielles subies par le volet et le corps de vanne, il est nécessaire de laisser un jeu entre le bord du volet et la surface interne de la paroi du conduit du corps de vanne en regard de laquelle le volet se déplace; de la sorte, et même à hautes températures, le volet ne vient pas frotter contre les parois du conduit dans lequel il est logé.

Lorsque le volet est en position fermée, son rôle est d'obturer le conduit de recirculation et d'imposer aux gaz de ne s'écouler que vers le conduit d'échappement. Néanmoins, du fait du jeu susmentionné, des fuites des gaz d'échappement dans la canalisation de recirculation peuvent se produire en position d'obturation du volet, ce qui constitue un problème. En particulier, de telles fuites de gaz d'échappement provoquent des fumées et des diminutions de performance du moteur.

Par ailleurs, il est connu, notamment des documents GB 1248860, DE 19936457 et DE 24 7995, des vannes « deux voies » comprenant une pièce intermédiaire entre deux portions de la vanne, le volet équipant la vanne venant au contact de ladite pièce intermédiaire. Lesdites portions de la vanne se succèdent longitudinalement.

L'invention vise à proposer un ensemble d'un corps de vanne et d'un joint d'étanchéité, le corps de vanne comportant un conduit d'écoulement des gaz et un volet d'obturation du mouvement des gaz dans le conduit, dans lequel les gaz ne fuient pas.

L'invention est née plus particulièrement de la nécessité de la présence d'un jeu entre les bords d'un volet et la surface de la paroi du conduit du corps de vanne d'une vanne trois voies de recirculation des gaz d'échappement d'un moteur thermique de véhicule automobile, en raison de la grande température des gaz d'échappement. La Demanderesse n'entend néanmoins pas limiter la portée de ses droits à cette seule application et entend résoudre le problème plus général de l'étanchéité d'un volet dans un corps de vanne comportant un conduit destiné à être relié à une canalisation en présence d'un écoulement de gaz à haute température. De manière encore plus générale, la Demanderesse entend résoudre un problème d'étanchéité d'un volet d'un corps de vanne destinée à être reliée à une canalisation.

A cet effet, l'invention concerne un ensemble d'un corps de vanne, d'un joint d'étanchéité, et d'un conduit selon la revendication 1.

Grâce à l'invention, le joint d'étanchéité assure, d'une part, l'étanchéité entre le conduit et la canalisation, que le volet soit en position ouverte ou fermée, d'autre part, l'étanchéité du volet en position fermée; en effet, le joint forme un siège pour le volet en position fermée, c'est-à-dire qu'il inhibe le mouvement des gaz entre le volet et le conduit, d'une part, et entre le volet et la canalisation, d'autre part.

Selon une forme de réalisation, le joint comporte une plaque métallique percée d'une fenêtre de passage des gaz, le joint formant un siège pour le volet sur au moins une partie de sa périphérie interne définissant la fenêtre.

Selon une forme de réalisation dans ce cas, la plaque comporte, sur sa périphérie interne, au moins une languette de butée pour un bord du volet.

Selon une forme de réalisation particulière, au moins une languette s'étend sensiblement dans le plan de la plaque du joint.

Selon une forme de réalisation particulière, au moins une languette exerce une force de rappel sur le volet en position fermée. Du fait de cette force de rappel, le contact entre le volet et le joint est mieux assuré, ainsi donc que leur étanchéité.

Selon une forme de réalisation dans ce cas, au moins une languette forme un angle avec le plan de la plaque du joint en direction de la zone du volet destinée à venir en contact avec elle et présente une certaine élasticité.

Selon une forme de réalisation particulière, au moins une languette est recourbée pour venir en contact avec le volet sur au moins une tranche d'un bord du volet.

Selon une forme de réalisation, le joint comporte des moyens de fixation au corps de vanne. En particulier, ces moyens de fixation peuvent comporter au moins un trou de passage d'une vis de fixation.

Selon une forme de réalisation, le volet étant mobile en rotation et comportant un plateau destiné à s'étendre, en position fermée du volet, sensiblement dans le plan du joint, l'axe de rotation du volet est déporté par rapport au plateau, par exemple pour s'étendre dans le conduit du corps de vanne. On peut noter qu'une telle forme de réalisation présente un intérêt, indépendamment du type de joint utilisé, en ce qu'il permet de diminuer les pertes de charges pour les gaz d'échappement, en position d'obturation du volet.

Selon l'invention, ladite canalisation permet une circulation directe des gaz dudit orifice d'entrée audit orifice de sortie, en position d'obturation dudit volet. Ledit orifice est apte à être obturé par ledit volet.

Selon une forme de réalisation de ladite vanne, ledit volet comprend deux ailes prévues de part et d'autre de son axe de rotation.

Dans un premier mode, la fenêtre dudit joint d'étanchéité s'étend alors de part et d'autre dudit axe de rotation du volet et chaque partie de la fenêtre située de part et d'autre dudit axe est respectivement fermée par une aile du volet. Chaque dite partie de la fenêtre pourra être munie de dites languettes de butée, destinées à coopérer avec chacune des ailes du volet.

Dans un autre mode, la fenêtre s'étend d'un côté de l'axe de rotation et le joint d'étanchéité présente une partie d'obturation, fermant partiellement ledit orifice ménagé sur la paroi de la canalisation de circulation directe des gaz, de l'autre. En position d'obturation du volet, l'une des ailes dudit volet ferme ladite fenêtre et l'autre se trouve en vis-à-vis de ladite partie d'obturation du joint.

Bien entendu, dans la présentation de l'invention qui vient d'être faite, on comprend, par l'écoulement des gaz entre le conduit et la canalisation, que les gaz peuvent s'écouler depuis le conduit vers la canalisation ou depuis la canalisation vers le conduit.

L'invention sera mieux comprise à l'aide de la description suivante de la forme de réalisation préférée de la vanne de l'invention, en référence aux planches de dessins annexées, sur lesquelles:
- la figure 1 représente une vue en perspective d'une vanne trois voies pour la recirculation des gaz d'échappement d'un véhicule automobile, connectée à un échangeur de chaleur;
- la figure 2 représente une vue en perspective, sans échangeur et sans conduit d'échappement, du corps de la vanne de la figure 1 tournée d'environ 90° dans le sens inverse des aiguilles d'une montre, vu de l'avant, avec un joint selon une première forme de réalisation de l'invention, le volet étant en position ouverte;
- la figure 3 représente une vue en perspective du joint de la figure 2;
- la figure 4 représente une vue en perspective du volet et du joint de la figure 2, en position fermée du volet;
- la figure 5 représente une vue en perspective du volet de la figure 2, vu de l'arrière;
- la figure 6 représente une vue en perspective d'une deuxième forme de réalisation d'un joint pour une vanne du type de celle de la figure 2, vu de l'arrière;
- la figure 7 représente une vue agrandie en perspective et en coupe d'une zone de contact entre un volet et le joint de la figure 6;
- la figure 8 représente une vue en perspective du volet et du joint de la figure 7, en position fermée du volet et

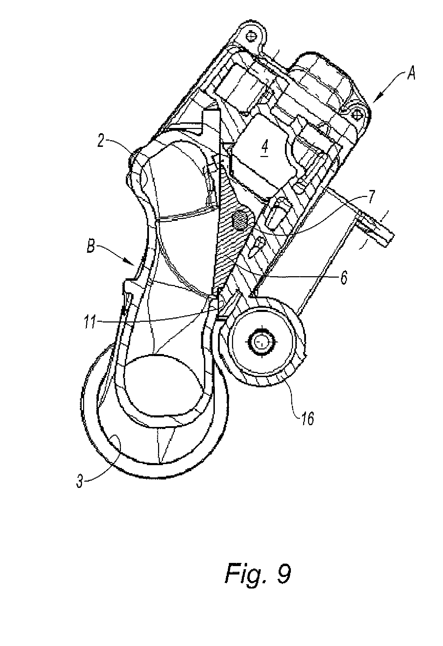

- la figure 9 représente une vue en coupe, dans le plan I-I indiqué sur la figure 1, de la vanne de la figure 1, avec le volet en position fermée.

Les notions d'avant et d'arrière sont choisies de manière purement conventionnelle et arbitraire, pour simplifier la description de la vanne, mais ne préjugent pas de l'orientation de la vanne en utilisation. Il s'agit ici de l'avant et l'arrière par rapport au plan du joint du volet, l'arrière étant du côté du conduit de recirculation menant à l'échangeur de chaleur.

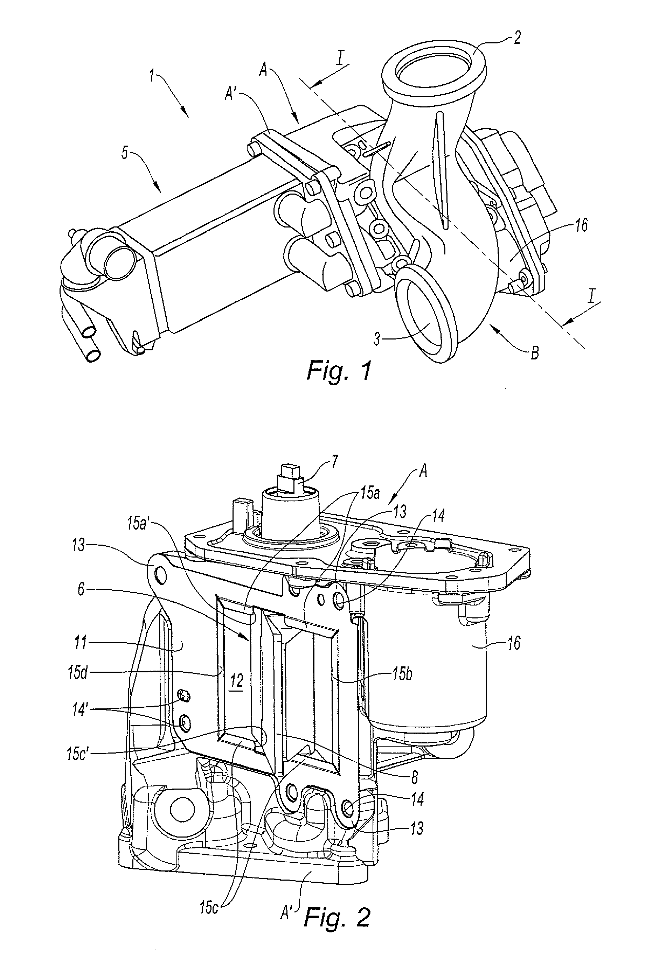

En référence à la figure 1, une vanne 1 dite "trois voies" comporte fonctionnellement un conduit 2 d'entrée des gaz dans la vanne, un premier conduit 3 de sortie des gaz et un deuxième conduit 4 de sortie des gaz. Structurellement, la vanne 1 comporte un corps de vanne A, sur lequel est montée et fixée une canalisation d'échappement B; la canalisation d'échappement forme le conduit d'entrée 2 et le premier conduit de sortie 3 et le corps de vanne A comporte le deuxième conduit de sortie 4.

On note que, par définition, une vanne est un élément comportant un volet et divers conduits et un corps de vanne est l'élément structurel de la vanne qui supporte le volet 6

Le premier conduit de sortie 3 est un conduit de sortie directe des gaz d'échappement; on le nommera conduit d'échappement 3. Le deuxième conduit de sortie 4 est un conduit d'entrée des gaz dans un refroidisseur 5, débouchant lui-même dans la voie recirculée du moteur guidant les gaz d'échappement vers le collecteur d'admission des gaz dans les cylindres (en amont ou en aval du ou des compresseurs); le deuxième conduit sera dénommé conduit de recirculation 4. Le refroidisseur 5 est fixé au corps de vanne A au niveau d'une collerette A' du corps de vanne A et débouche directement dans le volume du conduit de recirculation 4.

En sortie des cylindres, les gaz d'échappement admis dans le conduit d'entrée 2 de la vanne 1 peuvent soit être directement évacués par le conduit d'échappement 3, débouchant dans une canalisation d'échappement du moteur, soit être admis dans le refroidisseur 5, par le biais du conduit de recirculation 4. Ainsi, soit les gaz d'échappement passent uniquement dans la canalisation d'échappement B (c'est-à-dire fonctionnellement dans le conduit d'entrée 2 et le conduit d'échappement 3 de la vanne 1), aussi appelé ici canalisation de circulation directe des gaz, soit ils passent également dans le conduit de recirculation 4, par exemple au niveau d'un orifice ménagé sur la paroi de ladite canalisation de circulation directe des gaz, ledit orifice étant apte à être obturé par ledit volet 6.

L'invention s'applique au raccord entre le conduit 4 du corps de vanne A et la canalisation d'échappement B.

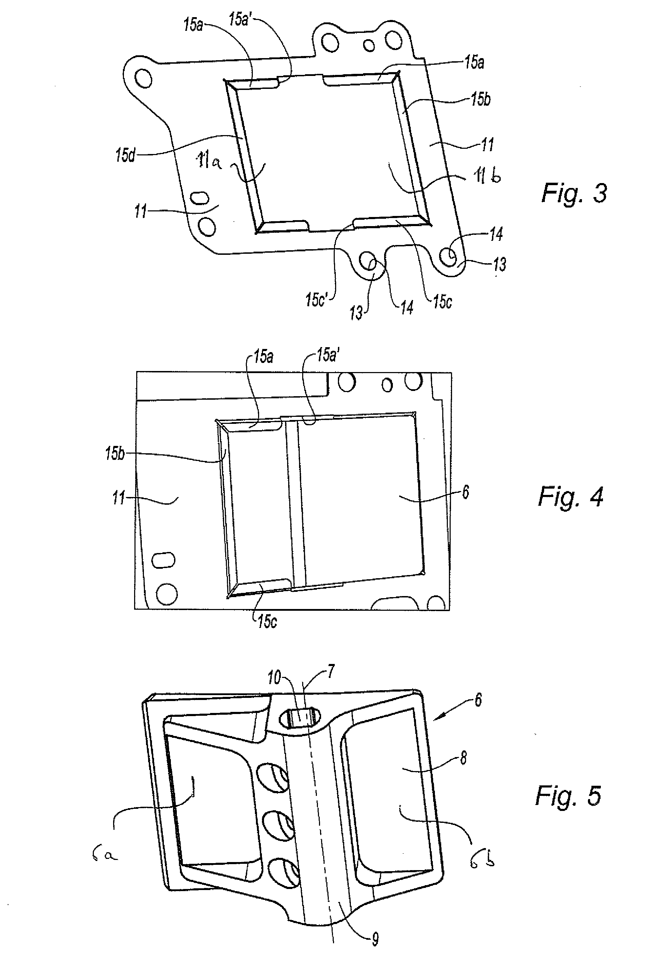

Le volet 6 est monté mobile en rotation autour d'un axe 7 (l'axe 7 désignant ici aussi bien la pièce mécanique que sa direction). En référence à la figure 5, le volet 6 comporte un plateau 8, de forme rectangulaire et sensiblement plane de son côté avant. De son côté arrière, le plateau 8 supporte une portion centrale 9 formant renflement 9, percée d'un alésage 10 de passage de l'axe 7 d'entraînement du volet 6 en rotation. Le volet 6 pivote autour de son axe de rotation 7.

L'axe 7 d'entraînement en rotation du volet 6 est entraîné par un moteur, par exemple un moteur à courant continu, non représenté, monté dans un logement 16 (en l'espèce cylindrique) du corps de vanne 4.

On note que l'axe 7 de rotation du volet 6 est déporté par rapport au plateau 8 du volet 6, c'est-à-dire qu'il n'est pas compris dans un plan de ce plateau 8 mais s'étend à distance du plateau 8, en l'occurrence sensiblement parallèlement au plateau 8. Cet agencement est lié à la structure du corps de vanne A et sera explicité plus loin. L'axe 7 de rotation du volet 6 s'étend par ailleurs sensiblement en position centrale par rapport au rectangle dont le plateau 8 a la forme; en l'occurrence, il est plus précisément légèrement désaxé et décalé vers un côté de ce rectangle (on parle bien entendu ici de la position de l'axe, par rapport au plateau, en projection orthogonale sur le plateau 8).

Lorsque le volet est ouvert, le volume du conduit de recirculation 4 et donc du refroidisseur 5 est directement en communication avec la canalisation d'échappement B; cette communication peut être obturée par le volet 6.

Un joint 11 est fixé entre le conduit de recirculation 4 du corps de vanne A et la canalisation d'échappement B. Le joint 11 se présente sous la forme d'une plaque métallique, qui s'étend globalement suivant un plan, percée d'une fenêtre 12 de passage des gaz. Ainsi, le joint 11 a la forme d'un cadre 11 sensiblement rectangulaire. A partir des bords extérieurs du cadre 11 sont ménagées des oreilles de fixation 13; chaque oreille 13 est percée d'un trou 14 pour le passage d'une vis de fixation ou d'un pion de centrage qui coopère avec des alésages correspondants du corps de vanne A, en l'occurrence dans des alésages ménagés à la périphérie du conduit de recirculation 4. Des trous 14' sont également prévus directement dans le cadre du joint 11 (sans oreilles).

En l'espèce, le corps de vanne A, la canalisation d'échappement B et le joint 11 sont agencés pour que les mêmes vis de fixation permettent de fixer ces trois éléments ensemble: chaque vis traverse donc la canalisation d'échappement B, le joint 11 et le corps de vanne A. Le joint 11 est ainsi fixé entre les surfaces en vis-à-vis de la canalisation d'échappement B et du corps de vanne A.

Le joint 11 est agencé pour former, au moins sur une partie de sa périphérie interne formant la fenêtre 12, un siège pour le volet 6 en position fermée. Ceci signifie qu'en position fermée, le volet 6 vient en appui sur le joint 11.

Les différentes formes de réalisation du joint 11 pour remplir cette fonction de siège de volet vont maintenant être décrites. Les autres éléments de la vanne (décrits ci-dessus) sont identiques, similaires ou comparables dans toutes les formes de réalisation et ne seront donc pas décrits de nouveau dans les différentes formes de réalisation. Par ailleurs, les mêmes nombres de référence seront utilisés pour les éléments de structure ou fonction identique, similaire ou comparable.

Selon une première forme de réalisation représentée sur les figures 2 à 4, le joint 11 comporte, ménagées sur ses bords internes, des languettes 15a, 15b, 15c, 15d de butée pour le volet 6, et plus précisément pour ses bords. Ces languettes 15a-15d sont planes et s'étendent, dans la forme de réalisation représentée, sensiblement dans le même plan que la plaque formant le joint 11. Elles sont agencées pour que des portions de surfaces transversales (par rapport à l'écoulement des gaz) du volet 6 situées le long de ses bords viennent en contact avec elles.

Plus précisément, en référence aux figures 3 et 4, les languettes latérales 15b, 15d s'étendent sur toute la longueur du bord interne correspondant du joint 11, tandis que les languettes supérieure 15a et inférieure 15c sont interrompues, dans leur partie centrale, par un évidement 15a', 15c', respectivement, de passage du volet 6. De nouveau, et de même que pour les notions d'avant et arrière, les positions supérieure, inférieure et latérales (droite et gauche) sont choisies de manière arbitraire et correspondent aux positions supérieure, inférieure et latérales (droite et gauche) sur la représentation de la figure 2; elles ne préjugent pas de la manière dont est orientée la vanne 1 dans le moteur.

Les évidements 15a', 15c' prévus dans les languettes supérieure 15a et inférieure 15c autorisent le passage du volet 6 et son pivotement autour de son axe 7. En position ouverte du volet 6, et comme on le voit sur la figure 2, le volet 6 n'obture pas la fenêtre 12 et son plateau 8 s'étend au travers des évidements 15a', 15c'; une partie de son plateau 8, située à droite de l'axe 7 sur la figure 2, s'étend à l'avant du joint 11, et l'autre partie, située à gauche de l'axe 7, s'étend à l'arrière du joint 11. En position fermée du volet 6, le volet 6 est en appui de part et d'autre du joint 11. Plus précisément, et comme on le voit sur la figure 4, les surfaces transversales le long des bords de la partie droite du volet 6 sont en appui sur les languettes 15a, 15b, 15c situées à droite des évidements 15a', 15c' de passage du volet 6, tandis que les surfaces transversales le long des bords de la partie gauche du volet 6 sont en appui sur les languettes 15a, 15c, 15d situées à gauche des évidements 15a', 15c' de passage du volet 6; on aura compris que, plus précisément encore, les bords de la partie droite du volet 6 sont en appui sur l'intégralité de la languette latérale droite 15b et sur les portions des languettes supérieure 15a et inférieure 15c situées à droite des évidements 15a', 15c' correspondants, tandis que les bords de la partie gauche du volet 6 sont en appui sur l'intégralité de la languette latérale gauche 15d et sur les portions des languettes supérieure 15a et inférieure 15c situées à gauche des évidements 15a', 15c' correspondants.

Ainsi, la partie droite du plateau 8 du volet 6 est en appui, par sa surface arrière, sur la surface avant des languettes 15a, 15b, 15c, tandis que la partie gauche du plateau 8 du volet 6 est en appui, par sa surface avant, sur la surface arrière des languettes 15a, 15c 15d. On comprend donc pourquoi l'axe 7 de rotation du volet 6 est déporté par rapport au plan du plateau 8, c'est-à-dire par rapport au plan du joint 11 lorsque le plateau 8 est en position fermée: le volet 6 est en appui, en position fermée, de part et d'autre du joint 11, sa partie centrale se trouvant donc dans le plan du joint 11, et l'axe de rotation est donc déporté pour s'étendre dans le conduit 4 du corps de vanne A, hors du plan du joint 11.

Le joint 11 forme ainsi un siège pour le volet 6 en position fermée. L'étanchéité de la vanne 1 est de la sorte améliorée. En effet, d'une part, l'étanchéité entre le conduit de recirculation 4 et la canalisation d'échappement B est assurée par le joint 11 fixé entre eux. D'autre part, en position fermée du volet 6, l'étanchéité entre le volet 6 et le conduit de recirculation 4, d'une part, ainsi qu'entre le volet 6 et la canalisation d'échappement B, d'autre part, est assurée par le contact entre les surfaces transversales du volet 6 le long de ses bords et les surfaces transversales des languettes 15a-15d du joint 11 formant un siège pour le volet 6.

Selon une forme de réalisation particulière de la première forme de réalisation du joint (avec languettes), les languettes 15a-15d sont agencées pour présenter une certaine élasticité ou souplesse, autrement dit, pour avoir un effet ressort sur le volet 6 et donc exercer une certaine résistance sur lui; de préférence dans ce cas, les languettes 15a-15d sont orientées, en position de repos (c'est-à-dire lorsque le volet 6 est ouvert), vers la portion de volet 6 avec laquelle elles sont destinées à être en contact en position fermée du volet; elles forment ainsi un angle avec le plan de la plaque formant le joint 11. Ainsi, la languette latérale droite 15b et les portions de languettes supérieure 15a et inférieure 15c situées à droite des évidements correspondants 15a', 15c' s'étendent avec un léger angle vers l'avant, tandis que la languette latérale gauche 15d et les portions de languettes supérieure 15a et inférieure 15c situées à gauche des évidements correspondants 15a', 15c' s'étendent avec un léger angle vers l'arrière. De ce fait, lorsque le volet 6 vient en butée sur les languettes 15a-15d, il exerce une contrainte sur les languettes 15a-15d pour les forcer en position transversale (contre leur orientation en position de repos). Du fait de l'effet ressort généré du fait de la souplesse des languettes 15a-15d, le contact entre les bords du volet 6 et les languettes 15a-15d est plus fort et homogène, puisque les languettes exercent sur le volet une force de rappel: l'étanchéité est ainsi améliorée.

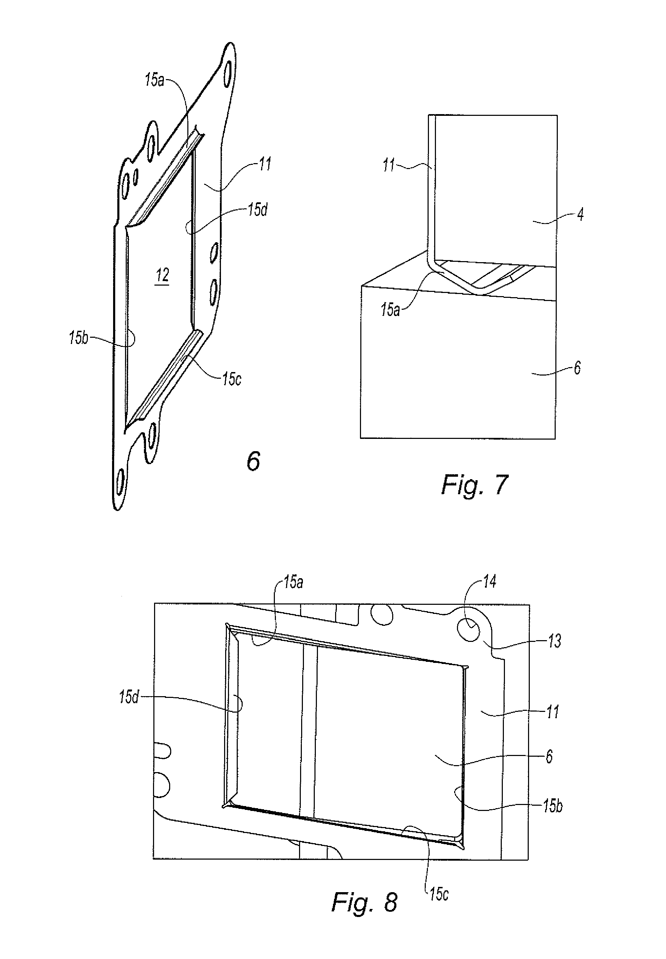

Selon une deuxième forme de réalisation représentée sur les figures 6 à 8, le joint 11 comporte, ménagées à partir de ses bords internes supérieur et inférieur, des languettes 15a, 15c recourbées. Chaque languette 15a, 15c est agencée pour que vienne en contact sur elle la tranche du bord correspondant du volet 6; les languettes 15a, 15c présentent une certaine souplesse pour avoir un effet ressort sur le volet 6 dans ce cas. On voit sur la figure 7 un gros plan d'un contact entre la languette supérieure 15a du joint 11 et la tranche du bord supérieur du volet 6. Lorsqu'il passe de la position ouverte à la position fermée, le volet 6 vient en contact avec les languettes supérieure 15a et inférieure 15c, dimensionnées de manière à gêner le passage des bords du volet 6; le volet 6 force sur ces languettes 15a, 15c et les amène à fléchir dans la direction de leur courbure, c'est-à-dire vers le haut pour la languette supérieure 15a et vers le bas pour la languette inférieure 15c. Du fait de ce fléchissement forcé, contre lequel les languettes 15a, 15c exercent une force de rappel, le volet 6 peut se mettre en position transversale dans la fenêtre 12 du joint 11, la languette supérieure 15a étant en contact sur la tranche du bord supérieur du volet 6 et languette inférieure 15c étant en contact sur la tranche du bord inférieur du volet 6, les languettes 15a, 15c exerçant une contrainte (force de rappel) sur les bords correspondants du volet 6, la force de rappel étant dirigée dans le sens du contact, c'est-à-dire favorisant le contact et améliorant donc l'étanchéité.

Le joint 11 comporte par ailleurs, ménagées sur ses bords latéraux, des languettes latérales transversales 15b, 15d semblables aux languettes latérales du joint 11 de la première forme de réalisation (avec ou sans effet ressort).

Comme on le voit sur la figure 8, le volet 6 vient, en position fermée, en contact sur les languettes recourbées supérieure 15a et inférieure 15c, le contact se faisant suivant des surfaces en vis-à-vis radial les unes des autres (les tranches des bords du volet 6 et les languettes 15a, 15c), tandis qu'il vient en contact sur les languettes latérales droite 15b et gauche 15d, le contact se faisant suivant des surfaces en vis-à-vis transversal les unes des autres (les surfaces transversales des bords latéraux du volet 6 et les surfaces transversales des languettes 15b, 15d). De même que précédemment, le bord droit du volet 6 est en contact du côté avant de la languette latérale droite 15b, tandis que le bord gauche du volet est en contact du côté arrière de la languette latérale gauche 15d.

Dans la forme de réalisation présentée, il n'est pas prévu d'évidements dans les languettes recourbées 15a, 15c pour le passage de la partie centrale du volet 6. Le volet 6 est donc constamment en contact et exerce une pression en continue sur la partie centrale des languettes recourbées 15a, 15c, tandis qu'il vient en contact sur toute leur longueur en position fermée.

Par ailleurs, dans la forme de réalisation présentée, les deux languettes recourbées 15a, 15c sont toutes deux recourbées vers l'arrière et s'étendent, comme on le voit sur la figure 7, du côté du conduit de recirculation 4, à l'arrière du joint 11. On pourrait prévoir qu'une languette soit recourbée vers l'avant et l'autre vers l'arrière. On pourrait par ailleurs prévoir que les quatre languettes (supérieure 15a, inférieure 15c et latérales 15b, 15d) soient recourbées.

Selon une autre forme de réalisation non représentée, certains bords internes du joint 11 sont en contact avec frottement avec les bords correspondants du volet 6; par exemple, les bords internes latéraux du joint 11 peuvent être munis de languettes de contact selon des surfaces transversales (comme dans la première forme de réalisation (figures 2 à 4)), tandis que les bords supérieur et inférieur peuvent ne pas comporter de structure particulière, c'est-à-dire être droits et affleurer avec les bords correspondants du volet 6 avec lesquels ils sont en contact avec frottement.

Selon une autre forme de réalisation non représentée, le joint 11 est semblable au joint de la première forme de réalisation avec languettes (avec ou sans frottements), à la différence que les évidements 15a', 15c' de passage du volet sont remplacés par des portions de languettes recourbées semblables aux languettes recourbées 15a, 15c de la deuxième forme de réalisation (figures 6 à 8). Ainsi, chaque languette supérieure et inférieure comporte une partie centrale en forme de languette recourbée et en contact continu avec le volet quelle que soit sa position, et une partie droite et une partie gauche en forme de languettes transversales et en contact avec le volet uniquement en position fermée.

Selon une autre forme de réalisation non représentée, le joint 11 comporte une plaque destinée à être fixée entre le conduit de recirculation 4 et la canalisation d'échappement B et dans laquelle est ménagée une fenêtre, des languettes s'étendant sur les bords de la fenêtre, mais dans un plan différent du plan de la plaque. Par exemple, les languettes peuvent à cet effet comporter une portion perpendiculaire à la plaque et, à partir de l'extrémité de cette portion perpendiculaire, une portion parallèle à la plaque (c'est-à-dire sensiblement transversale à l'écoulement des gaz), destinée à former une butée pour une surface transversale d'un bord du volet. Ainsi, la butée du volet sur les languettes se fait dans un plan parallèle distinct du plan de la plaque.

Selon les différentes formes de réalisation évoquées plus haut, le volet 6 comprend deux ailes 6a, 6b prévues de part et d'autre de son axe de rotation 7.

Dans un premier mode, correspondant à celui illustré, la fenêtre 12 dudit joint d'étanchéité 11 s'étend de part et d'autre dudit axe de rotation 7 du volet et chaque partie 11a, 11b de la fenêtre 10 située de part et d'autre dudit axe 7 est respectivement fermée par une aile 6a, 6b du volet. Chaque dite partie de la fenêtre pourra être munie de dites languettes de butée 15a, 15d, 15c; 15a, 15b, 15c, destinées à coopérer avec chacune des ailes 6a, 6b du volet.

Dans un autre mode, non illustré, la fenêtre s'étend d'un côté de l'axe de rotation et le joint d'étanchéité présente une partie d'obturation, fermant partiellement ledit orifice ménagé sur la paroi de la canalisation de circulation directe des gaz, de l'autre. Autrement dit, si l'on reporte à la figure 3, le joint en cause correspondrait au joint illustré à cette figure à la différence prêt que la fenêtre 12 ne serait définie que par la partie 11a et l'emplacement laissé libre pour la rotation de l'axe 10. Le reste de la fenêtre serait obturée par une partie borgne du joint, par exemple obtenu par emboutissage, en retrait du plan occupé par la partie périphérique dudit joint. Ainsi, en position d'obturation du volet, l'une des ailes 6a dudit volet fermerait ladite fenêtre et l'autre 6b se trouverait en vis-à-vis de ladite partie borgne du joint.

Les formes de réalisation présentées et d'autres peuvent bien sûr être combinées. D'autres formes de réalisation sont envisageables; en particulier, le volet et la fenêtre du joint peuvent ne pas être de forme rectangulaire.

## Revendications

1. Ensemble d'un corps de vanne (A), d'un joint d'étanchéité (11) et d'une canalisation (B), le corps de vanne (A) comportant un conduit (4) d'écoulement de gaz et un volet (6), monté mobile entre une position ouverte et une position fermée d'obturation du mouvement des gaz dans le conduit (4), le conduit (4) étant relié à la canalisation (B) pour permettre l'écoulement de gaz entre eux, le joint d'étanchéité (11) étant monté entre le conduit (4) et la canalisation (B) pour assurer l'étanchéité aux gaz entre eux, le joint (11) formant un siège pour le volet (6) en position fermée, ledit ensemble formant une vanne dite "trois voies" pour un moteur thermique de véhicule automobile, dans laquelle la canalisation est une canalisation d'échappement (B) ménageant un conduit (2) d'entrée des gaz dans la vanne et un conduit (3) d'échappement direct des gaz hors de la vanne, le conduit (4) d'écoulement de gaz étant configuré pour former une recirculation des gaz d'échappement vers un échangeur de chaleur (5) et étant relié à la canalisation (B) au niveau d'un orifice ménagé sur la paroi de cette dernière.

2. Ensemble selon la revendication 1, dans lequel le joint (11) comporte une plaque métallique percée d'une fenêtre (12) de passage des gaz, le joint (11) formant un siège pour le volet (6) sur au moins une partie de sa périphérie interne définissant la fenêtre (12).

3. Ensemble selon la revendication 2, dans lequel la plaque comporte, sur sa périphérie interne, au moins une languette (15a, 15b, 15c, 15d) de butée pour un bord du volet (6).

4. Ensemble selon la revendication 3, dans lequel au moins une languette (15a, 15b, 15c, 15d) s'étend sensiblement dans le plan de la plaque du joint.

5. Ensemble selon l'une des revendications 3 ou 4, dans lequel au moins une languette (15a, 15b, 15c, 15d) exerce une force de rappel sur le volet (6) en position fermée.

6. Ensemble selon la revendication 5, dans lequel au moins une languette (15a, 15b, 15c, 15d) forme un angle avec le plan de la plaque du joint en direction de la zone du volet (6) destinée à venir en contact avec elle et présente une certaine élasticité.

7. Ensemble selon l'une des revendications 5 ou 6, dans lequel au moins une languette (15a, 15b, 15c, 15d) est recourbée pour venir en contact avec le volet (6) sur au moins une tranche d'un bord du volet (6).

8. Ensemble selon l'une des revendications 1 à 7, dans lequel le joint (11) comporte des moyens (14, 14') de fixation au corps de vanne (A).

9. Ensemble selon l'une des revendications 1 à 8, dans lequel le volet (6) étant mobile en rotation et comportant un plateau (8) destiné à s'étendre, en position fermée du volet (6), sensiblement dans le plan du joint (11), l'axe (7) de rotation du volet (6) est déporté par rapport au plateau (8).

## Patentansprüche

1. Einheit aus einem Ventilkörper (A), einer Dichtung (11) und einer Kanalisation (B), wobei der Ventilkörper (A) eine Gasableitung (4) und eine Klappe (6) umfasst, die beweglich zwischen einer offenen Position und einer geschlossenen Position zur Verhinderung der Bewegung der Gase in der Leitung (4) montiert ist, wobei die Leitung (4) mit der Kanalisation (B) verbunden ist, um das Ableiten von Gas zwischen ihnen zu ermöglichen, wobei die Dichtung (11) zwischen der Leitung (4) und der Kanalisation (B) montiert ist, um die Gasdichtigkeit zwischen ihnen zu gewährleisten, wobei die Dichtung (11) einen Sitz für die Klappe (6) in der geschlossenen Position bildet, wobei die Einheit ein so genanntes "Dreiwegeventil" für eine Wärmekraftmaschine eines Kraftfahrzeugs bildet, bei dem die Kanalisation eine Auspuffkanalisation (B) ist, die eine Leitung (2) für den Eintritt der Gase in das Ventil und eine Leitung (3) zur direkten Ableitung der Gase aus dem Ventil ausnimmt, wobei die Gasableitung (4) derart ausgeführt ist, dass sie eine Rezirkulation des Auspuffgase zu einem Wärmetauscher (5) bildet, und mit der Kanalisation (B) auf Höhe einer Öffnung verbunden ist, die an der Wand dieses letztgenannten ausgenommen ist.

2. Einheit nach Anspruch 1, bei der die Dichtung (11) eine Metallplatte umfasst, die mit einem Gasdurchgangsfenster (12) versehen ist, wobei die Dichtung (11) einen Sitz für die Klappe (6) auf mindestens einem Teil ihrer inneren Peripherie, die das Fenster (12) definiert, bildet.

3. Einheit nach Anspruch 2, bei der die Platte an ihrer inneren Peripherie mindestens eine Anschlaglasche (15a, 15b, 15c, 15d) für einen Rand der Klappe (6) umfasst.

4. Einheit nach Anspruch 3, bei der sich mindestens eine Lasche (15a, 15b, 15c, 15d) im Wesentlichen in der Ebene der Platte der Dichtung erstreckt.

5. Einheit nach einem der Ansprüche 3 oder 4, bei der mindestens eine Lasche (15a, 15b, 15c, 15d) eine Rückstellkraft auf die Klappe (6) in der geschlossenen Position ausübt.

6. Einheit nach Anspruch 5, bei der mindestens eine Lasche (15a, 15b, 15c, 15d) einen Winkel mit der Ebene der Platte der Dichtung in Richtung der Zone der Klappe (6) bildet, die dazu bestimmt ist, mit ihr in Kontakt zu kommen, und eine gewisse Elastizität aufweist.

7. Einheit nach einem der Ansprüche 5 oder 6, bei der mindestens eine Lasche (15a, 15b, 15c, 15d) gebogen ist, um mit der Klappe (6) auf mindestens einem Abschnitt eines Randes der Klappe (6) in Kontakt zu kommen.

8. Einheit nach einem der Ansprüche 1 bis 7, bei der die Dichtung (11) Mittel (14, 14') zur Befestigung am Ventilkörper (A) umfasst.

9. Einheit nach einem der Ansprüche 1 bis 8, bei der, da die Klappe (6) drehbeweglich ist und eine Platte (8) umfasst, die dazu bestimmt ist, sich in geschlossener Position der Klappe (6) im Wesentlichen in der Ebene der Dichtung (11) zu erstrecken, die Drehachse (7) der Klappe (6) in Bezug zur Platte (8) versetzt ist.

## Claims

1. Assembly of a valve body (A), a seal (11) and a pipe (B), the valve body
(A) comprising a gas flow duct (4) and a flap (6) which is mounted so as to be able to move between an open position and a closed position obstructing the movement of the gases in the duct (4), the duct (4) being connected to the pipe
(B) to allow gas to flow therebetween, the seal (11) being mounted between the duct (4) and the pipe (B) to provide gastightness therebetween, the seal (11) forming a seat for the flap (6) in the closed position, said assembly forming a valve referred to as a three-way valve for a heat engine of a motor vehicle, wherein the pipe is an exhaust pipe (B) providing a duct (2) for entry of the gases into the valve and a duct (3) for direct evacuation of the gases out of the valve, the gas flow duct (4) being designed to form a recirculation of the exhaust gases towards a heat exchanger (5) and being connected to the pipe (B) at a hole which is made in the wall of said pipe.

2. Assembly according to claim 1, wherein the seal (11) comprises a metal plate which is pierced by a window (12) for the gases to pass through, the seal (11) forming a seat for the flap (6) over at least part of the internal periphery thereof defining the window (12).

3. Assembly according to claim 2, wherein the plate comprises, on the internal periphery thereof, at least one stop tab (15a, 15b, 15c, 15d) for an edge of the flap (6).

4. Assembly according to claim 3, wherein at least one tab (15a, 15b, 15c, 15d) extends substantially in the plane of the plate of the seal.

5. Assembly according to either claim 3 or claim 4, wherein at least one tab (15a, 15b, 15c, 15d) exerts a restoring force on the flap (6) in the closed position.

6. Assembly according to claim 5, wherein at least one tab (15a, 15b, 15c, 15d) forms an angle with the plane of the plate of the seal towards the region of the flap (6) which is intended to come into contact with said tab, and has some elasticity.

7. Assembly according to either claim 5 or claim 6, wherein at least one tab (15a, 15b, 15c, 15d) is curved so as to come into contact with the flap (6) on at least one portion of an edge of the flap (6).

8. Assembly according to any of claims 1 to 7, wherein the seal (11) comprises means (14, 14') for fixing said seal to the valve body (A).

9. Assembly according to any of claims 1 to 8, wherein, since the flap (6) is able to move in rotation and comprises a plate (8) which is intended to extend, in the closed position of the flap (6), substantially in the plane of the seal (11), the axis (7) of rotation of the flap (6) is offset from the plate (8).
